# EUROPEAN PATENT APPLICATION

(11) **EP 2 785 011 A1**
(43) Date of publication of application: **01.10.2014**
(21) Application number: 13305379.3
(22) Date of filing: 27.03.2013
(51) Int. Cl.: H04L 29/06, H04W 12/04

(54) **Method to establish a secure voice communication using generic bootstrapping architecture**

(71) Applicant: Gemalto SA, 92190 Meudon (FR)
(72) Inventor: Nishi, Kenji, 13705 LA CIOTAT (FR); Pauliac, Mireille, 13705 LA CIOTAT (FR)

(57) **Abstract**

The present invention relates to a method to establish a secure voice communication session between two user equipments (UE1, UE2) with the help of a dedicated Network Application Functions (NAF) and of at least one Bootstrapping Server Function (BSF1, BSF2), comprising the steps of:
- calculating a session key (Ks_SV) from bootstrapping service derived external or internal NAF keys of the first and the second user equipments (Ks_(ext/int)_NAF1 and Ks_(ext/int)_NAF2) and
- establishing a secured voice communication (SV) using the calculated session key (Ks_SV).

## Description

### FIELD OF THE INVENTION

The present invention relates to a method to establish a secure voice communication session between two user equipments. In the invention. "user" means a subscriber to a certain mobile network service (MNO). More particularly the invention relates to the implementation of such secure voice communication in the context of Generic Bootstrapping Architecture.

The invention also pertains to network application functions (NAF) and to a GBA compliant user equipment able to implement steps of the method of the invention.

### BACKGROUND OF THE INVENTION

In mobile phones, Generic Bootstrapping Architecture (GBA) is one technology enabling the establishment of shared keys between a User Equipment and any Application Server thanks to the 3GPP user authentication. This 3GPP user authentication is possible if the user owns a valid identity on a Home Location Register (HLR) or a Home Subscriber Server (HSS).

GBA is standardized at the 3GPP. 3GPP TS 33.220 specifies Generic Bootstrapping Architecture (GBA), which allows a User Equipment (UE) and a Network Application Function server (NAF) to share a secret by interacting with Bootstrapping Server Function (BSF). The user authentication is instantiated by a shared secret between the user in a smartcard inside his/her mobile equipment and the other is on the HLR/HSS.

GBA bootstrapping authenticates the user by sending a network component challenge to the user's card and verify that the answer is similar to the one predicted by the HLR/HSS.

The architecture includes the user equipment (UE), i.e a Mobile Equipment (ME, e.g. a mobile cellular telephone) including a smart card (a UICC), that needs access to a specific service, an application server (NAF: Network Application Function), e. g. for mobile TV, that provides the service, a Bootstrapping Server Function (BSF), that arranges security relation between UE and NAF thanks to its connection with the HSS, a mobile network operator's Home Subscriber Server (HSS), that hosts user profiles.

The term 'bootstrapping' is related to building a security relation with a previously unknown device first and to allow installing security elements (keys) in the device and the BSF afterwards.

Thus, instead of asking a service provider NAF to rely on HLR or HSS for every key establishment request, the BSF establishes a shared secret between the user's card and the service provider NAF. This shared secret is limited in time and for a specific domain.

The secret derived via GAA/GBA procedure can be used for further communication between the UE (composed of ME and UICC) and the NAF. One advantage is that there is no need for user enrollment phase nor secure deployment of keys, making this solution a very low cost one compared to PKI. It is also easy to integrate the authentication method into terminals and service providers, as it is based on HTTP's "Digest access authentication". Every Web server already implement HTTP digest authentication and the effort to implement GBA on top of digest authentication is thus minimal.

On device side is needed an HTTP client (Web browser) implementing digest authentication and the special case designed by a "3gpp" string in the HTTP header and a mean to dialog with a smartcard and to sign a challenge sent by the BSF. Direct communications with the smart card through APDU via the BaseBand of the device are used. GBA nevertheless does not apply for any communication between two or more parties and even less voice communication. As there is a need to secure such voice communication when carried on the web, further alternative and advantageous solutions relative to the GBA would, accordingly, be desirable in the art.

Further, GBA based UICC is called GBA_U UICC.

### SUMMARY OF THE INVENTION

The present invention aims at securing voice communication without requiring the use of dedicated infrastructure.

The present invention thus proposes a method to establish a secure voice communication session between two user equipments with the help of a dedicated Network Application Functions (NAF) and of at least one Bootstrapping Server Function (BSF), comprising the steps of:
- for a first user equipment, sending a request of communication with a second user equipment and a request for security association to a dedicated Network Application Function,
- for the first user equipment, proceeding to a challenge procedure comprising:
   - for the first user equipment, establishing a link with a first Bootstrapping Server Function BSF1,
- for the BSF1, transmitting a challenge to the first user equipment,
- for the first user equipment, responding to the challenge transmitted by the BSF1,
- for the BSF1, verifying the challenge response,
- for the NAF, retrieving bootstrapping service derived NAF keys from the BSF1,
- for the second user equipment, receiving a request for communication with the first user equipment,
- for the second user equipment, sending a request for security association to a dedicated Network Application Function,
- for the second user equipment, proceeding to a challenge procedure comprising:
   - for the second user equipment, establishing a link with a second Bootstrapping Server Function BSF2,
- for the BSF2, transmitting a challenge to the second user equipment,
- for the second user equipment, responding to a challenge transmitted by the BSF2,
- for the BSF2, verifying the challenge response,
- for the NAF, retrieving bootstrapping service derived NAF keys from the BSF2,
   the method further comprising the steps of:
- calculating a session key from bootstrapping service derived NAF keys of the first and the second user equipments and
- establishing a secured voice communication using the calculated session key.

While using the GBA authentication of each user on each side of a voice communication, the invention enables to base a secure voice communication on the GBA architecture without requiring further implementation of security features. The invention involves an extension of NAF capability, which is based on GBA infrastructure. And eventually, the function of GBA compliant UICC is also enhanced. With the invention a mobile network operator can offer security related services leveraging GBA infrastructure without needing to upgrade UICCs deployed in the field. It is here noted that the number of user equipments could be increased while remaining under the scope of the invention. The used key materials are the ones defined in 3GPP TS 33.220 or TS 33.110.

Basically, the NAF possesses the following key materials for each user: RAND, B-TID, Ks_ext_NAF, Ks_int_NAF, other attributes, like key lifetime, UICCType, and so forth.

According to a first embodiment, said step of calculation of the session key is performed by the NAF that further sends the key session to both equipments encrypted with respective NAF keys.

This embodiment is adapted to any configuration where the UICC is not GBA_U.

Advantageously, in case where there is at least one of the user equipment comprising a GBA_U compliant UICC, the encryption of the session key by the NAF for this user equipment uses an internal NAF key.

This enables the session key to be decrypted in the UICC itself and to enhance security.

According to a second embodiment, the method includes a step of generation by the NAF of two messages comprising data to be used to calculate the session key, each message comprising, for a given equipment, at least a NAF key of the other equipment encrypted with the own NAF key of said given equipment, a step of sending the encrypted messages to both equipments and, for each equipment, a step of decryption of the encrypted message and a step of calculation of the session key from its own derived NAF key and the other user equipment's NAF key received in the message.

External NAF key can be transferred and external or internal NAF key can be used for encryption. It is necessary for the both calculations to have the same inputs. The same pair of NAF key, one for the first user equipment and the second for the second equipment, has to be known on both calculation sides. Messages thus include the complementary NAF key for the calculation of the session key. Such KeyMaterials (e.g User_Param, Ks_NAF, other attributes) are sent to each user equipment from the NAF over Ua secure tunnel.

Preferably transferred NAF keys are external NAF keys.

In fact, GBA standard is currently not open to the transfer of internal NAF keys since according to GBA principle the internal NAF key shall never leave the UICC of a user equimement and shall not be shared with another user equipment for security reasons. With this feature only Ks_ext_NAF, and thus not internal NAF key, of another user can be seen by the user of a mobile equipment in case the message exchanged between the mobile equipment and the NAF is encrypted with Ks_ext_NAF of the mobile equipment. Thus, it is theoretically possible for a user to observe and retrieve Ks_ext_NAF of other users. And later, he/she can use those obtained keys fraudulently to masquerade another user for instance. This solution is not thus completely secure.

According to a preferred feature, at least one user equipment comprising a GBA_U compliant UICC, the encryption of the NAF key of the other equipment for this user equipment uses the internal NAF key for this user equipment.

This avoids the mobile equipment having the GBA compliant UICC from knowing the key materials of the other user equipment. The internal NAF key of the other equipment is in fact known only by the NAF and from the UICC inside the mobile equipment. Preferably, both equipments are in this situation. The sending of the internal NAF keys of each UICC to the other could thus be avoided. This encryption procedure prevents a vicious user from trying to eavesdrop the communication in the middle and to collect the other users' keys, so that he/she can use them for fraudulent actions later on. It is here noted that, if a non GBA_U compliant UICC is able to derive keys by any other means than by the GBA_U compliance, such feature can been implemented.

According to an advantageous feature, the UICC further comprising a calculation module to calculate the session key, the session key is calculated inside the UICC.

This implies the use of a GBA_U compliant UICC. It has here to be noted that a user can compute all the keys theoretically by monitoring the communication between the ME and the UICC. It is thus highly recommended to make the UICC compute the session key instead of the ME as stated in this advantageous embodiment.

According to a particular feature, first and second BSF being the same BSF, the NAF keys or the session key are calculated by this BSF, is retrieved by the NAF and sent to the user equipments encrypted with respective NAF keys.

This feature centralizes the calculation of session key inside the BSF which can be preferable for the MNO or required by the MNO.

The invention also concerns a Network Application Functions (NAF) server comprising:
- a receiver to receive, from user equipments, requests of communication with another user equipment;
- a retriever to retrieve bootstrapping service derived keys Ks_(ext/int)_NAF from at least one BSF for the two user equipments;
- a calculation module to calculate a session key or to generate a message from bootstrapping service derived NAF keys Ks_(ext/int)_NAF1 and Ks_(ext/int)_NAF2;
- an encryption module to encrypt the session key or the message using respective user equipment's NAF keys;
- a transmitter to send the encrypted session key or to send the generated message for constructing the session key that will enable each user equipment to calculate the common session key.

The invention also relates to a GBA compliant user equipment comprising:
- a challenge processing module to respond a challenge received from a BSF,
- a key derivation module,
- a communication module comprising at least:
   - a transmitter to transmit requests of communication with another user equipment,
   - a receiver to receive requests of communication from another user equipment and receive a message for constructing a session key or receive an encrypted session key,
   - a voice communication module to establish a communication with another equipment using said session key,
   - a decryption module to decrypt a message for constructing the session key or a session key,
- in the case a message for constructing the session key is received, a calculation module to calculate the session key from the message.

Advantageously, such GBA compliant user equipment comprises an UICC including said challenge processing module, said key derivation module and said decryption module.

Such user equipment can implement some of the preferred embodiments of the invention where the decryption of the message for constructing the session key or of the session key itself is realized inside the UICC.

Preferably, said UICC further includes said calculation module.

Such a user equipment is able to implement the preferred embodiment and option of the invention where the session key is calculated inside the UICC guaranteeing the strongest security.

With the invention, a true end to end security for user-to-user communication can be achieved without requiring physical replacement of UICC deployed in the field. The mechanism is generic and can be applied to any type of user-to-user secure communication.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 represents the environment in which the invention is implemented;
- Figure 2 shows schematically an embodiment of the method of the invention;
- Figure 3 shows schematically another embodiment of the invention;
- Figure 4 schematically represents an user equipment wherein the invention is advantageously implemented;
- Figure 5 schematically shows a GBA compliant UICC (GBA_U UICC) as advantageously implemented in an user equipment as shown on figure 4.

### DETAILED DESCRIPTION OF EMBODIMENTS OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In the drawings, like numerals refer to the same or similar functionality throughout the several views. For clarity, only those elements and steps which are useful to the understanding of the present invention have been shown in the drawings and will be described.

Then, when an action is said to be performed by a device, it is in fact executed by a microprocessor in this device controlled by instruction codes recorded in a program memory on the said device. An action is also ascribed to an application. This means that part of the instruction codes making up the application are executed by the microprocessor.

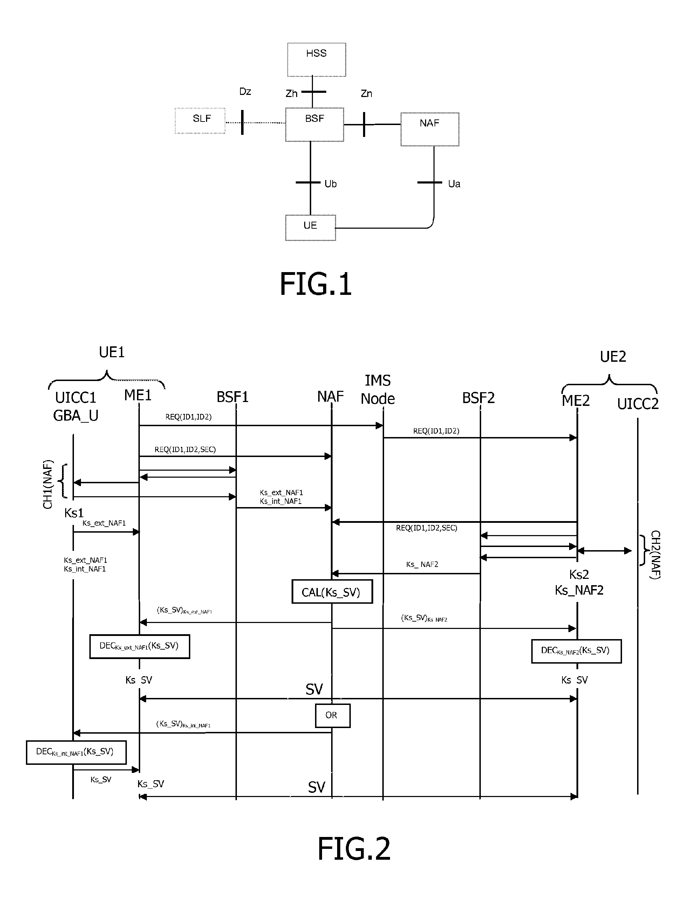

Figure 1 shows a GBA environment where the invention finds its application. It comprises at least an user equipment UE connected to a Network Application Function NAF through a first interface Ua and to a Bootstrapping Server Function BSF through a second interface Ub. The both functions NAF and BSF are connected to each other through an interface Zn.

The BSF is further connected to at least a Home Subscriber Server HSS through an interface Zh. Advantageously the BSF is also connected to a Subscriber Locator Function SLF through an interface Dz. Names of different functions and interfaces are standardized in the Generic Bootstrapping Architecture standard.

Figure 2 schematically shows an embodiment of the invention where a session key is calculated by the NAF. In this figure a first user equipment UE1 comprises a GBA compliant integrated circuit UICC1. Such an integrated circuit UICC1 is typically a smart card introduced inside a mobile equipment ME1 also GBA compliant. This mobile equipment ME1 is advantageously a smart-phone but could also be a computer. It has however necessarily to be GBA compliant.

The invention intervenes when the user of the user equipment UE1 requests a secure voice communication to be established with another user having a second user equipment UE2. Thus the UE1 sends a request of communication REQ(ID1,ID2) to the second user equipment UE2 typically e.g. via an underlying IP Multimedia Subsystem (IMS). This request of communication REQ(ID1,ID2) includes the identifiers ID1 and ID2 of the two user equipments.

In parallel UE1 sends a request for security association REQ(ID1,ID2,SEC) for this voice communication to a dedicated Network Application Function NAF. This triggers the establishment of a link with a Bootstrapping Server Function BSF1. This BSF1 is for example the one of the Mobile Network Operator of UE1. If no valid bootstrapped key Ks is available in the UE1, an initial bootstrapping procedure designated by curly bracket CH1(NAF) is thus launched between UE1 and BSF1. A challenge is generally sent to the user equipment UE1 that gives a response in return. The entire security is thus based on MNO's credential used to authenticate one subscriber. As it can be seen on figure 2, the UICC1 is implicated in the challenge response calculation. Once the challenge response is sent back to the BSF1 and also verified by the BSF1, this last one proceeds to a bootstrapped key derivation procedure to obtain bootstrapped key Ks1.

Following request REQ(ID1, ID2, SEC) from the UE1, the NAF sends request to the BSF1 in order to retrieve the NAF keys associated to the UE1. Here, as UE1 comprises a GBA compliant UICC1, two NAF keys are obtained, one external Ks_ext_NAF1 and one internal Ks_int_NAF1. Those keys are then sent to the NAF by the BSF1.

In parallel with the procedure where UE1 is implicated, the other user equipment UE2, that received the request for communication REQ(ID1,ID2) sends a request for security association REQ(ID1,ID2,SEC) to NAF. This launches an initial bootstrapping procedure between UE2 and a second BSF2 if no valid bootstrapped key is available in the UE2. It implies the UICC2 being implicated according to the GBA requirements even if this UICC is not GBA compliant. Said procedure is designated by curly brackets CH2(NAF). Indeed, the two BSF could be the same, e.g. if the same MNO is used by the two user equipments but, on a general base, they are different.

Here it has to be noted that, in the example shown on figure 2, the second UE2 consists of a mobile equipment ME2 itself GBA compliant and a UICC that is not GBA compliant.

When the procedure CH2(NAF) is ended, the BSF proceeds to key derivation for the concerned NAF from a bootstrapped key Ks2. Here a single Ks_NAF2 is obtained. This key, which is of the external type (belonging to the mobile equipment ME2), is then transferred to the NAF.

In the embodiment shown on figure 2, the NAF is then calculating a session key Ks_SV for the secure voice communication in a step CAL(Ks_SV).

Then the session key Ks_SV is encrypted differently depending on the recipient UE1 or UE2. In the case, a same BSF is accessible for both user equipments, the session key calculation can also be performed in the BSF.

For example Ks_SV = KDF(Ks_int_NAF_1, Ks_int_NAF_2, User_Param_1, User_Param_2, ...)

User Param can be RAND, B-TID, and other attributes associated to each user's Ks_int_NAF.

External NAF key could also be used.

The session key (Ks_SV)_{Ks_ext_NAF1} encrypted with Ks_ext_NAF1 is sent to UE1 and (Ks_SV)_{Ks_NAF2} encrypted with Ks_NAF2 is sent to UE2. On each side, the session key is then decrypted DEC_{Ks_ext_NAF1}(Ks_SV), DEC_{Ks}__{NAF2}(Ks_SV) by mobile equipments ME1and ME2 using respectively Ks_ext_NAF1 and Ks_NAF2. Then the communication SV can take place using the common session key Ks_SV between the two user equipments UE1 and UE2.

Also shown on figure 2 after OR, in a variant, session key Ks_SV can be encrypted using the internal NAF key Ks_int_NAF1. In this case, the decryption DEC_{Ks_int_NAF1}(Ks_SV) is done inside the UICC1 on the side of the mobile equipment UE1 and the session key is then transferred internally to the mobile equipment ME1 for use in the secure voice communication SV. To overcome potential security attack, one would prefer to use ETSI TS 102 484 secure channel between ME and UICC. When ETSI TS102 484 secure channel is used, one additional control on the UICC side can be implemented in order to reinforce the security of the entire system. The control is to allow access to GBA functionality only if the following conditions are met:
(1) Access to GBA functionality is done through secure channel
(2) The external application has its right to access to GBA function.

If there is no such a control, a situation could occur where attacker tries to retrieve keys exchanged outside the secure channel by forcing the ME not to set up secure channel.

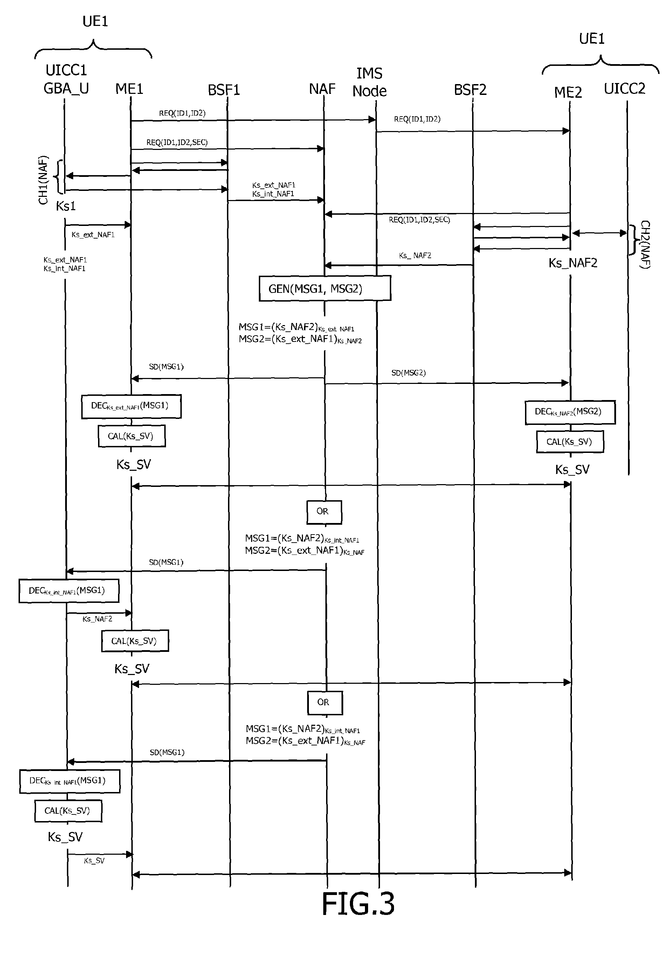

Figure 3 shows another embodiment of the invention where the session key is calculated locally by each of the both user equipments UE1 and UE2 using messages generated and sent by NAF.

The beginning of the method is identical with the one shown on figure 2. An initial bootstrapping procedure is implemented on both sides with the two user equipments.

Once the NAF received Ks_NAF2 and Ks_int_NAF1, Ks_ext_NAF1, it generates in a step GEN(MSG1,MSG2) two encrypted messages MSG1 and MSG2 each being intended to be sent to each one of the equipments UE1 and UE2.

The message MSG2 intended to be sent in a step SD(MSG2) to UE2 includes at least the external NAF key of ME1 encrypted with the NAF key of ME2. Thus the internal NAF key of UICC1 is kept inside the NAF and is not threaten by any leak. Messages may further include identifiers and other data, for example a random that could be used for the derivation of the session key.

In a first option, the message MSG1 intended to be sent in a step SD(MSG1) to UE1 includes at least the NAF key of ME2 encrypted with the external NAF key of ME1. This option corresponds to a case where the session key Ks_SV is calculated in a step CAL in the mobile equipment ME1 in a way similar to the one implemented in UE2. This stands after the decryption DEC of the encrypted message MSG1 using the external NAF key of ME1.

In a second option, shown after the first OR in figure 3, the NAF key of the mobile equipment ME2 is encrypted using the internal NAF key of the user equipment UE1. This implies the encrypted message MSG1 to be decrypted in UICC1 with Ks_int_NAF1. Then the calculation of the session key Ks_SV can be done after transfer of the decrypted Ks_NAF2 by the UICC1 to the mobile equipment ME1 or directly inside UICC1 if the necessary resources are available in UICC1 as illustrated after the second OR.

It is here understood that this last option is the most secure for this embodiment as only the external NAF keys of the user equipments are transferred securely and all calculation to obtain the session key are done inside UICC1.

It is here underlined that, if the user equipment UE2 would also have an integrated circuit card GBA compliant UICC2, the option could have been applied to both equipment and the obtained method would have been completely secure as only the both external NAF keys Ks_ext_NAF1 and Ks_ext_NAF2 would be transferred respectively encrypted with internal keys Ks_int_NAF2 and Ks_int_NAF1. The decryption of MSG1 and MSG2 and the calculation of the session key Ks_SV would be done in the respective UICC before being transferred to respective mobile equipment ME1 and ME2 in charge for them to establish the voice communication using the obtained session key Ks_SV. Here, using the attributes communicated with the messages enabling the construction of the session key, fine-tuned usage control is possible. In other words, UICC can do a check according to predefined security policy. For example, UICCType can be used to check if the counterpart has the correctly configured UICC and if not, it rejects the key derivation request.

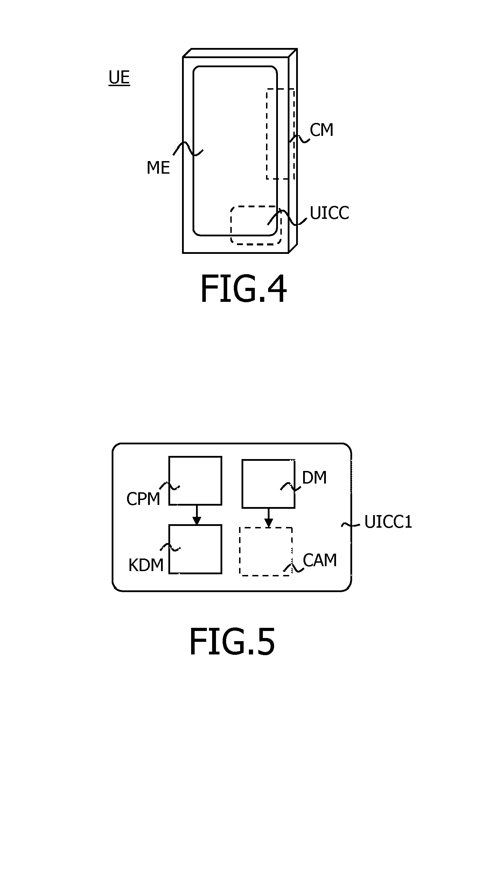

Figure 4 schematically shows a user equipment UE wherein the invention is implemented. UE comprises a mobile equipment ME, typically a mobile phone, an integrated circuit card UICC and communication means CM including at least:
a transmitter adapted to transmit requests of communication with another user equipment,
   - a receiver adapted to receive requests of communication from another user equipment and receive an encrypted message enabling the calculation of a session key or directly receive an encrypted session key and
   - a voice communication module to establish a communication with another equipment using said session key.

Such communication means are not further disclosed as the man skilled in the art will be able to implement such means that can be based on wireless interfaces, advantageously, or on wired interfaces. In the GBA system, the role of UICC is fundamental as UICCs constitute distributed security tokens.

Figure 5 shows schematically an integrated circuit card GBA compliant UICC1 as implemented inside the user equipment of figure 4. This UICC1 comprises a challenge processing module CPM to respond a challenge received from a BSF, a key derivation module KDM, a decryption module DM to decrypt a message containing data to calculate a session key or containing directly a session key. In the case an encrypted message comprising data to calculate a session key is received, it advantageously further includes a calculation module CAM to calculate the session key from the decrypted message. It has to be noted that UICC1 is here described with partitioned entities while such entities could be only functionality implemented inside the UICC.

The above detailed description is not to be taken in a limiting sense, and the scope of the present invention is defined only by the appended claims, appropriately interpreted, along with the full range of equivalents to which the claims are entitled.

## Claims

1. Method to establish a secure voice communication session between two user equipments (UE1, UE2) with the help of a dedicated Network Application Functions (NAF) and of at least one Bootstrapping Server Function (BSF1, BSF2), comprising the steps of:
- for a first user equipment (UE1), sending a request (REQ(ID1,ID2)) of communication with a second user equipment (UE2) and a request for security association (REQ(ID1,ID2),SEC) to a dedicated Network Application Function (NAF),
- for the first user equipment (UE1), proceeding to a challenge procedure (CH1(NAF)) comprising:
- for the first user equipment (UE1), establishing a link with a first Bootstrapping Server Function BSF1,
- for the BSF1, transmitting a challenge to the first user equipment (UE1),
- for the first user equipment (UE1), responding to the challenge transmitted by the BSF1,
- for the BSF1, verifying the challenge response,
- for the NAF, retrieving bootstrapping service derived NAF keys (Ks_(ext/int)_NAF1) from the BSF1,
- for the second user equipment (UE2), receiving a request (REQ(ID1,ID2)) for communication with the first user equipment (UE1),
- for the second user equipment (UE2), sending a request for security association (REQ(ID1,ID2),SEC) to a dedicated Network Application Function (NAF),
- for the second user equipment (UE2), proceeding to a challenge procedure (CH2(NAF)) comprising:
- for the second user equipment (UE2), establishing a link with a second Bootstrapping Server Function (BSF2),
- for the BSF2, transmitting a challenge to the second user equipment (UE2),
- for the second user equipment (UE2), responding to a challenge transmitted by the BSF2,
- for the BSF2, verifying the challenge response,
- for the NAF, retrieving bootstrapping service derived external and internal NAF keys (Ks_(ext/int)_NAF2) from the BSF2,
the method further comprising the steps of:
- calculating a session key (Ks_SV) from bootstrapping service derived external or internal NAF keys of the first and the second user equipments (Ks_(ext/int)_NAF1 and Ks_(ext/int)_NAF2) and
- establishing a secured voice communication (SV) using the calculated session key (Ks_SV).

2. Method according to claim 1, wherein said step of calculation (CAL(Ks_SV) of the session key (Ks_SV) is performed by the NAF that further sends the calculated session key (Ks_SV) to both equipments (UE1,UE2) encrypted with respective NAF keys.

3. Method according to claim 2, wherein, at least one of the user equipment comprising a GBA_U compliant UICC, the encryption of the session key (Ks-SV) by the NAF for this user equipment uses an internal NAF key.

4. Method according to claim 1, wherein it includes a step of generation (GEN(MSG1, MSG2)) by the NAF of two messages (MSG1, MSG2) comprising data to be used to calculate the session key (Ks_SV), each message (MSG1, MSG2) comprising, for a given equipment, at least a NAF key of the other equipment, encrypted with the own NAF key of said given equipment, a step of sending (SD(MSG1,SD(MSG2)) the encrypted messages (MSG1, MSG2) to both equipments and, for each equipment, a step of decryption (DEC) of the encrypted message and a step of calculation (CAL(Ks_SV)) of the session key from its own derived NAF key and the other user equipment's NAF key received in the message.

5. Method according to claim 4, wherein the transferred NAF keys are external NAF keys.

6. Method according to claim 4 or 5, wherein, at least one user equipment comprising a GBA_U compliant UICC, the encryption of the NAF key of the other equipment uses the internal NAF key for this user equipment.

7. Method according to claim 6, wherein, the UICC further comprising a calculation module (CAM) to calculate the session key (Ks_SV), the session key is calculated inside the UICC.

8. Method according to claim 1, wherein, first and second BSF being the same BSF, the NAF keys or the session key are calculated by this BSF, is retrieved by the NAF and sent to the user equipments (UE1,UE2) encrypted with respective NAF keys.

9. Network Application Functions (NAF) server comprising:
- a receiver to receive, from user equipments, requests of communication with another user equipment;
- a retriever to retrieve bootstrapping service derived keys Ks_(ext/int)_NAF from at least one BSF for the two user equipments;
- a calculation module (CAM) to calculate a session key or to generate a message from bootstrapping service derived NAF keys Ks_(ext/int)_NAF1 and Ks_(ext/int)_NAF2;
- an encryption module to encrypt the session key or the message using respective user equipment's NAF keys;
- a transmitter to send the encrypted session key or to send the generated message for constructing the session key that will enable each user equipment to calculate the common session key.

10. GBA compliant user equipment (UE) comprising:
- a challenge processing module (CPM) to respond a challenge received from a BSF,
- a key derivation module (KDM),
- a communication module (CM) comprising at least:
- a transmitter to transmit requests of communication with another user equipment,
- a receiver to receive requests of communication from another user equipment and receive a message for constructing a session key or receive an encrypted session key,
- a voice communication module to establish a communication with another equipment using said session key
- a decryption module (DM) to decrypt a message for constructing the session key or a session key,
- in the case a message is received, a calculation module (CAM) to calculate the session key from the message.

11. GBA compliant user equipment according to claim 10, wherein it comprises an UICC including said challenge processing module (CPM), said key derivation module (KDM) and said decryption module (DM).

12. GBA compliant user equipment according to claim 11, wherein said UICC further includes said calculation module (CAM).
